(19) Europäisches Patentamt / European Patent Office / Office européen des brevets

(11) **EP 4 239 530 A1**

(12) # EUROPEAN PATENT APPLICATION

(43) Date of publication:
**06.09.2023 Bulletin 2023/36**

(21) Application number: **22209875.8**

(22) Date of filing: **28.11.2022**

(51) International Patent Classification (IPC):
***G06N 3/049*** *(2023.01)*

(52) Cooperative Patent Classification (CPC):
**G06N 3/049**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.03.2022 IN 202221011943**

(71) Applicant: **Tata Consultancy Services Limited Maharashtra (IN)**

(72) Inventors:
- **BANERJEE, Dighanchal**
  **700160 Kolkata - West Bengal (IN)**
- **MUKHERJEE, Arijit**
  **700160 Kolkata - West Bengal (IN)**
- **DEY, Sounak**
  **700160 Kolkata - West Bengal (IN)**
- **GEORGE, Arun**
  **560066 Bangalore - Karnataka (IN)**

(74) Representative: **Goddar, Heinz J. et al Boehmert & Boehmert Anwaltspartnerschaft mbB Pettenkoferstrasse 22 80336 München (DE)**

(54) **METHOD AND SYSTEM FOR MUTUAL INFORMATION (MI) BASED SPIKE ENCODING OPTIMIZATION OF MULTIVARIATE DATA**

(57)    Disadvantage of these existing approaches for spike encoding optimization are that they fail to process multivariate data and perform energy-efficient time series classification at edge. The disclosure herein generally relates to spike encoding optimization, and, more particularly, to a method and system for Mutual Information (MI) based spike encoding optimization. Before performing spike data optimization for a given input multivariate time series data, the system ensures by iteratively adding gaussian noise to the input data that the input data has achieved a maximum MI value. After the input data has achieved a maximum MI value, spike train optimization is done by the system, to generate optimized spike data and in turn a spike reservoir.

FIG. 3

**Description**

CROSS-REFERENCE TO RELATED APPLICATIONS AND PRIORITY

The present application claims priority to Indian application no. 202221011943, filed on March 4, 2022.

TECHNICAL FIELD

The disclosure herein generally relates to spike encoding optimization, and, more particularly, to a method and system for Mutual Information (MI) based spike encoding optimization of multivariate data.

BACKGROUND

Spiking neural networks (SNNs) is coming up as an alternative to classical Machine Learning techniques to address power constrained edge use cases such as gesture recognition by robots/drones, image classification in satellites, keyword spotting in mobile phones etc. SNNs are capable of faster learning and are able to reach optimal solution much faster by consuming much less power thanks to its unique way of encoding real valued analogue data into sparse voltage spike trains - very similar to that of cortical neurons. Sensors such as DVS camera1, AEREAR etc. are capable of mimicking functionality of human eye, ear etc. and upon receiving a stimulus, they generate spike trains that can straightaway be consumed by a SNN

However most of the sensors that are currently being used fail to generate such spike trains thus making them incompatible with SNNs. As a result, an initial data conversion may be required to convert the real valued data into spikes by using certain spike encoding techniques such as rate encoding (based on number of spikes), temporal encoding (based on spike timing) etc. However these encoders are often found to be lossy in nature i.e. they do not preserve full information content during the spike encoding process. Some spike encoders have an associated decoder with them while some do not have. For the spike encoders having the decoders, the decoders are used to validate the output of the encoder and it works irrespective of nature and size of data. The spike encoders which do not have an associated decoder, depend on deterministic and probabilistic measures to quantify the information content in the encoded spike train. It has been found that probabilistic measures works well for temporally varying data (i.e. speech data, video, gesture or any time series). Along with these, information theory based stimulus-response model for neural coding and statistical measure based approaches for static input data also are being used. For temporal signals, Petro et al. proposed an error optimization between input signal and its decoded version. Taherkhani et al. tried a supervised way of optimizing the encoded spike train by tuning the weight parameters of SNN. However, disadvantage of these existing approaches are that they fail to process multivariate data and also fail to perform efficient time series classification. Reason why the existing approaches fail to handle the multivariate data is that handling the multivariate data requires multiple channels of input encoder, and for efficient encoding an optimal set of tuned parameters is required. In the absence of the optimal set of tuned parameters in spike domain, the existing approaches were observed to be performing poorly for any task.

SUMMARY

Embodiments of the present disclosure present technological improvements as solutions to one or more of the above-mentioned technical problems recognized by the inventors in conventional systems. For example, in one embodiment, a processor implemented method is provided. The method involves collecting, via one or more hardware processors, a time-series data as input data. Further, a ranked set of optimized dimensions in the input data are generated via the one or more hardware processors. Further, the input data is encoded to a spike domain, via the one or more hardware processors, by processing the ranked set of optimized dimensions using an encoding scheme. Further, a Mutual Information (MI) between the input data and corresponding data from the spike domain is determined for each of a plurality of dimensions of the input data, via the one or more hardware processors, wherein the MI is a quantitative representation of similarity between the input data and the corresponding data from the spike domain. Further, a weighted sum of the MI of the plurality of dimensions of the input data is determined, via the one or more hardware processors. Further, it is determined if the weighted sum of the MI at least matches a maximum MI value, via the one or more hardware processors, wherein the input data is optimized to achieve the maximum MI value if the weighted sum of the MI is not matching the maximum MI value. Further, a plurality of spike trains in the spike data are optimized, via the one or more hardware processors, using the input data after achieving the maximum MI value, to generate an optimized set of spike trains.

In another embodiment, the maximum MI is updated in one or more of a plurality of iterations of optimization of the spike train. In this process, value of the maximum MI in a current iteration is compared with the value of the maximum MI in previous iteration. Then the maximum MI is updated as equal to the value of the maximum MI in the current iteration, if the value of the maximum MI in the current iteration is exceeding the value of the maximum MI in the previous iteration.

In yet another embodiment, a system is provided. The system includes one or more hardware processors, a communication interface, and a memory storing a plurality of instructions, wherein the plurality of instructions when executed, cause the one or more hardware processors to initially collect a time-series data as input data. Further, a ranked set of optimized dimensions in the input data are generated via the one or more hardware processors. Further, the input data is encoded to a spike domain, via the one or more hardware processors, by processing the ranked set of optimized dimensions using an encoding scheme. Further, a Mutual Information (MI) between the input data and corresponding data from the spike domain is determined for each of a plurality of dimensions of the input data, via the one or more hardware processors, wherein the MI is a quantitative representation of similarity between the input data and the corresponding data from the spike domain. Further, a weighted sum of the MI of the plurality of dimensions of the input data is determined, via the one or more hardware processors. Further, it is determined if the weighted sum of the MI at least matches a maximum MI value, via the one or more hardware processors, wherein the input data is optimized to achieve the maximum MI value if the weighted sum of the MI is not matching the maximum MI value. Further, a plurality of spike trains in the spike data are optimized, via the one or more hardware processors, using the input data after achieving the maximum MI value, to generate an optimized set of spike trains.

In yet another embodiment, the system updates the maximum MI in one or more of a plurality of iterations of optimization of the spike train. In this process, value of the maximum MI in a current iteration is compared with the value of the maximum MI in previous iteration. Then the maximum MI is updated as equal to the value of the maximum MI in the current iteration, if the value of the maximum MI in the current iteration is exceeding the value of the maximum MI in the previous iteration.

In yet another aspect, a non-transitory computer readable medium is provided. The non-transitory computer readable medium includes a plurality of instructions, which when executed, cause the one or more hardware processors to perform the following steps. Initially, a time-series data is collected as input data. Further, a ranked set of optimized dimensions in the input data are generated. Further, the input data is encoded to a spike domain, by processing the ranked set of optimized dimensions using an encoding scheme. Further, a Mutual Information (MI) between the input data and corresponding data from the spike domain is determined for each of a plurality of dimensions of the input data, wherein the MI is a quantitative representation of similarity between the input data and the corresponding data from the spike domain. Further, a weighted sum of the MI of the plurality of dimensions of the input data is determined. Further, it is determined if the weighted sum of the MI at least matches a maximum MI value, wherein the input data is optimized to achieve the maximum MI value if the weighted sum of the MI is not matching the maximum MI value. Further, a plurality of spike trains in the spike data are optimized, using the input data after achieving the maximum MI value, to generate an optimized set of spike trains.

In yet another embodiment, the non-transitory computer readable medium wen executed causes the one or more hardware processors to update the maximum MI in one or more of a plurality of iterations of optimization of the spike train. In this process, value of the maximum MI in a current iteration is compared with the value of the maximum MI in previous iteration. Then the maximum MI is updated as equal to the value of the maximum MI in the current iteration, if the value of the maximum MI in the current iteration is exceeding the value of the maximum MI in the previous iteration.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for Mutual Information (MI) based spike encoding, according to some embodiments of the present disclosure.
FIGS. 2A and 2B (collectively referred to as FIG. 2) is a flow diagram depicting steps involved in the process of Mutual Information (MI) based spike encoding by the system of FIG. 1, according to some embodiments of the present disclosure.
FIG. 3 is an example functional flow diagram illustrating the steps in the process of Mutual Information (MI) based spike encoding by the system of FIG. 1, in accordance with some embodiments of the present disclosure.
FIGS. 4A and 4B depict comparison of input data before and after applying PCA on the input data, by the system of FIG. 1, in accordance with some embodiments of the present disclosure.
FIGS. 5A and 5B depict comparison of Mutual Information (MI) determined before and after applying PCA, and distribution of optimal values, on a training data set, by the system of FIG. 1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Spiking neural networks (SNNs) is coming up as an alternative to classical Machine Learning techniques to address power constrained edge use cases such as gesture recognition by robots/drones, image classification in satellites, keyword spotting in mobile phones etc. SNNs are capable of faster learning and are able to reach optimal solution much faster by consuming much less power thanks to its unique way of encoding real valued analogue data into sparse voltage spike trains - very similar to that of cortical neurons. Sensors such as DVS camera1, AEREAR etc. are capable of mimicking functionality of human eye, ear etc. and upon receiving a stimulus, they generate spike trains that can straightaway be consumed by a SNN

However most of the sensors that are currently being used fail to generate such spike trains thus making them incompatible with SNNs. As a result, an initial data conversion may be required to convert the real valued data into spikes by using certain spike encoding techniques such as rate encoding (based on number of spikes), temporal encoding (based on spike timing) etc. However these encoders are often found to be lossy in nature i.e. they do not preserve full information content during the spike encoding process. Some spike encoders have an associated decoder with them while some do not have. For the spike encoders having the decoders, the decoders are used to validate the output of the encoder and it works irrespective of nature and size of data. The spike encoders which do not have an associated decoder, depend on deterministic and probabilistic measures to quantify the information content in the encoded spike train. It has been found that probabilistic measures works well for temporally varying data (i.e. speech data, video, gesture or any time series). Along with these, information theory based stimulus-response model for neural coding and statistical measure based approaches for static input data also are being used. For temporal signals, Petro et al. proposed an error optimization between input signal and its decoded version. Taherkhani et al. tried a supervised way of optimizing the encoded spike train by tuning the weight parameters of SNN. However, disadvantage of these existing approaches are that they fail to process multivariate data and perform energy-efficient time series classification at edge.

The disclosure herein generally relates to spike encoding optimization, and, more particularly, to a method and system for Mutual Information (MI) based spike encoding optimization. The system uses MI as a metric of information content between original multivariate time series data that is input to the system and spike trains in corresponding spike data. MIs corresponding to each dimension of the input data is considered and have been maximized by augmenting a Gaussian noise to the original data.

This approach has the following advantages. (i) it helps retain information content and data features to the maximal extent, (ii) enhances the efficiency and performance of the subsequent spiking network, and (iii) consideration of the entire spike trains for MI calculation makes the approach suitable on time series data.

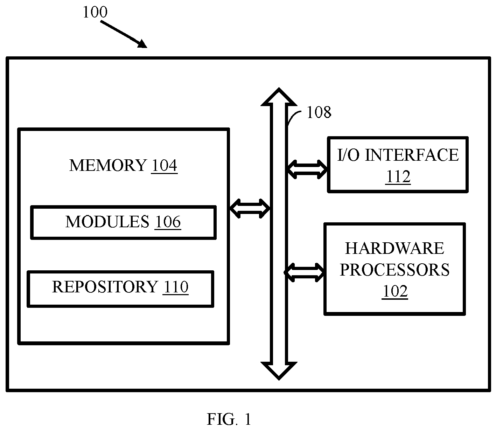

Referring now to the drawings, and more particularly to FIG. 1 through 5B, where similar reference characters denote corresponding features consistently throughout the figures, there are shown preferred embodiments and these embodiments are described in the context of the following exemplary system and/or method.

FIG. 1 illustrates an exemplary system for Mutual Information (MI) based spike encoding, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the spike data optimization being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the spike data optimization.

The data repository (or repository) 110 may include a plurality of abstracted piece of code for refinement and data that is processed, received, or generated as a result of the execution of the plurality of modules in the module(s) 106.

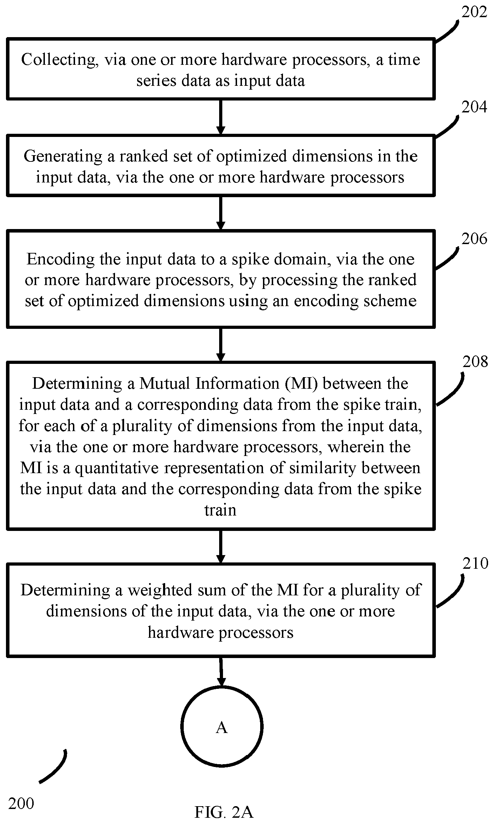

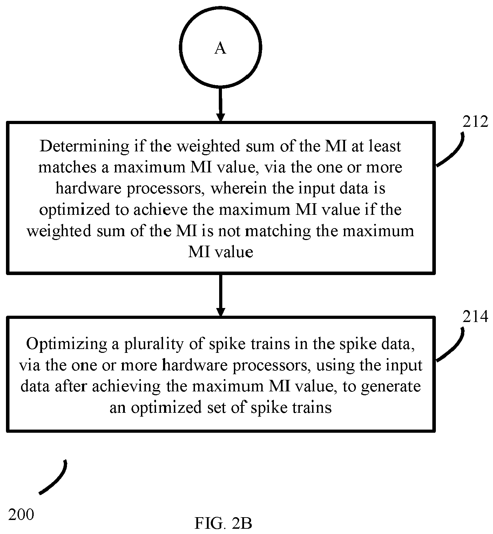

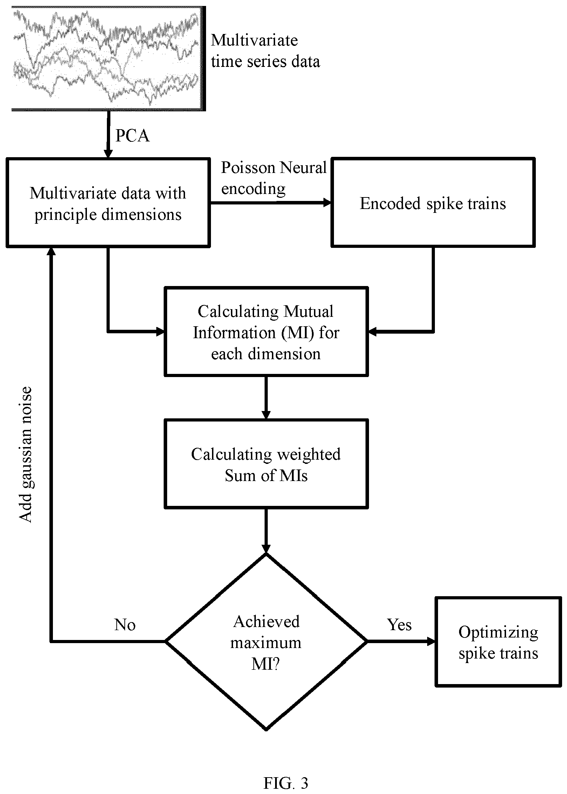

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagram in FIG. 2 and the example functional flow diagram in FIG. 3.

FIG. 2 is a flow diagram depicting steps involved in the process of Mutual Information (MI) based spike encoding by the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 of FIG. 2, by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200 in FIG. 2, the system 100 collects a time series data as input data, from one or more data sources such as but not limited to industrial plants. In an embodiment, the time series data collected as input data is a multivariate time series data. Further, at step 204, the system 100 generates a ranked set of optimized dimensions in the input data via the one or more hardware processors, by applying a Principle Component Analysis (PCA) on the input data. While applying the PCA on the multivariate data, it was observed that entire variability in the data points are covered with a lesser number of dimensions. During this process, a required number of dimensions is determined based on behavior of a cumulative explained variance ratio (CEV ratio) with respect to number of dimensions for a multivariate time series data considered. During experiments conducted further, it was observed that out of 9 dimensions the CEV ratio saturated for 4 to 5 dimensions, which indicated that for any multivariate time series data considering a few dimensions instead of considering all the data doesn't result in significant data loss. Further, at step 206, the system 100 encodes the input data to a spike domain, via the one or more hardware processors, by processing the ranked set of optimized dimensions using an encoding scheme. In an embodiment, the system 100 may use any appropriate encoding scheme to encode the input data to the spike domain. For example, as depicted in FIG. 3, the encoding scheme used by the system 100 is Poisson neural encoding. A rate based Poisson encoding when used to generate initial spike trains, where probability of observing n spikes in a time interval ($t_1, t_2$ ) is given as:

$$P\big(n \; spikes \; during \; (t_1, t_2)\big) = e^{(<n>)} \frac{|\langle n \rangle|^n}{n!} \qquad \text{--- (1)}$$

where $\langle n \rangle$ represents average spike count, and is represented as:

$$\langle n \rangle = \int_{t_1}^{t_2} r(t)dt \quad ---(2)$$

where, r(t) denotes instantaneous firing rate. With slow variation of r(t) in small time sub-interval $\delta t$, r(t) can be assumed with a discrete rate value r[i].

With the approximation of a Poisson process b infinitely many Bernoulli trials and each Bernoulli trial by a uniform a draw x[i] at each time step i, the spike is denoted as:

$$T[i] = 1 \text{ if } x[i] < r[i]\delta t \text{ and } T[i] = 0 \text{ if } x[i] \geq r[i]\delta t \quad ---(3)$$

Further, at step 208, the system 100 determines a Mutual Information (MI) between the input data and corresponding data from the spike domain is determined for each of a plurality of dimensions of the input data, via the one or more hardware processors, wherein the MI is a quantitative representation of similarity between the input data and the corresponding data from the spike domain. The system 100 determines the MI separately for each of the plurality of dimensions. In an embodiment, the system 100 uses joint probability mass function (PMF) and marginal PMF for the calculation of MI between the input data and the corresponding data from the spike domain in each of the dimensions. The system 100 may extract and use temporal information contained in an entire spike train of each of a plurality of dimensions of the input data to determine the MI.

For example, performance of a spiking neural network dependents on the effectiveness of encoding scheme used to convert the input data to the corresponding spike trains. Conversion approaches such as the Poisson encoding have a lossy nature, and to compensate for losses during the conversion, approaches to quantify the amount of information during a transmission between communication systems is used. The system 100 may use a concept of entropy of a random variable (H(X)) which can be calculated as:

$$H(X) = -\sum_{x \in X} P_X(x) log P_X(x) \quad ---(4)$$

where $P_X(x)$ is the probability of the random variable X taking the value x. Entropy is the expected value of self-information in the variable X and is a measure of uncertainty associated with it.

The system 100 uses the MI in order to maximize amount of information preserved during the conversion, and is calculated as:

$$I(X;Y) = \sum_{(x,y) \in \chi * \gamma} P_{XY}(x,y) log \frac{P_{XY}(x,y)}{P_X(x)P_Y(y)} \quad ---(5)$$

This equation maybe simplified as:

$$I(X;Y) = H(X) - H(X|Y) \quad ---(6)$$

Further, at step 210, the system 100 determines a weighted sum of the MI of the plurality of dimensions of the input data is determined, via the one or more hardware processors. In an embodiment, weightage values for the purpose of determining the weighted sum of the MI are selected based on Eigen value of the covariance matrix of the original stimulus and / be the mutual information between stimulus and encoded spike trains. The weighted sum matching or exceeding a maximum MI value indicates that the input data and the spike data are matching/similar to an extent that the spike data may be processed further for various applications such as but not limited to logistic regression based classification. However, the value of the weighted sum being less than the maximum MI value may indicate that the input data and the spike data are dissimilar to an extent that the spike data cannot be processed further for the other applications or to infer data. If the weighted sum is below the maximum MI value, then at step 214, the system 100 optimizes the input data to achieve the maximum MI value. In an embodiment, in order to achieve the maximum MI, the system 100 adds gaussian noise to the input data iteratively till the maximum MI is achieved. In this process, quantity of the gaussian noise added to the input data in each iteration may be same and fixed. For example, in a first iteration the defined quantity of gaussian noise is added to the input data and then the system 100 repeats steps 204 through 212 to determine if the input data (i.e. after adding the gaussian noise) has achieved the maximum MI. The step of adding the gaussian noise and checking if the input data has achieved the maximum MI is repeated till the input data has achieved the maximum MI. The step of adding the gaussian noise is further elaborated below:

Let $S_i$ be signal obtained after applying the PCA on the input data, and $T_i$ be corresponding spike train created with the Poisson encoding for $i^{th}$ dimension of the input data. Let $T_\sigma^i$ be encoded spike train for a signal $S_i + \sigma_S^i$, where $\sigma_S^i$ is $i^{th}$ component of gaussian noise $\sigma_s$. Let $e_i$ be $i^{th}$ eigen value of the covariance matrix of the input data and $I$ represents the mutual information between the input data and the spike data. An optimization for this scenario is defined as:

$$\underset{\sigma}{maximize} \sum_i e_i I\left(T_\sigma^i; S_i\right)$$

$$subject \ \sum_i e_i I\left(T_\sigma^i; S_i\right) \geq \sum_i e_i I(T_i; S_i) \qquad \text{--- (7)}$$

In an embodiment, the system 100 may update the maximum MI value, based on the following steps. The system 100 compares value of the maximum MI in a current iteration with the value of the maximum MI in previous iteration. If the value of maximum MI is exceeding the value of the maximum MI in the previous iteration, the system 100 updates the maximum MI as equal to the value of the maximum MI in the current iteration.

By adding the Gaussian noise the maximum MI can be obtained. Logic used at this step by the system 100 is that the spike trains with maximum MI contains highest possible information about the time series and enhances the performance of a spiking network compared to that using base encoded spike trains.

After achieving the maximum MI, at step 214, the system 100 optimizes a plurality of spike trains in the spike data, via the one or more hardware processors to generate an optimized set of spike trains. The steps in method 200 are depicted in the functional flow diagram in FIG. 3. The optimized set of spike trains may be then stored in a spiking reservoir and may be then used for various applications such as the logistic regression based classification.

Experimental Data:

Dataset & Setup: In order to incorporate variability in different attributes of a time series, (such as number of dimensions, length of the time series, number of classes, training size etc.) the method 200 was tested with five different multivariate time series: (i) Atrial Fibrillation - a physionet dataset of two-channel ECG recordings, (ii) Racket Sports2 - the gyroscope and accelerometer data recorded from a smart watch while playing badminton, (iii) Ethanol Concentration - the raw spectral data of water and ethanol solutions in 44 different whisky bottles, (iv) Finger Movements - recording of different EEG channels, and (v) Pen Digits - touch sensor data of coordinates of a pen traced across a digital screen. The spiking reservoir was implemented using BindsNet 0.2.7, a GPU based open source SNN simulator in Python.

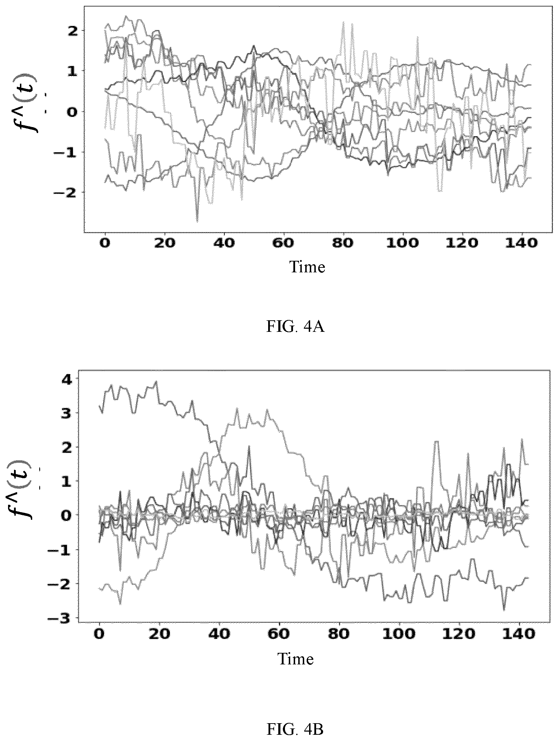

The PCA was applied on each dataset and then they were encoded into spike trains by maximizing mutual information. FIG. 4A depicts the input multivariate time series data and FIG. 2B depicts transformed version after performing PCA. This helps to identify the principal dimensions of the dataset.

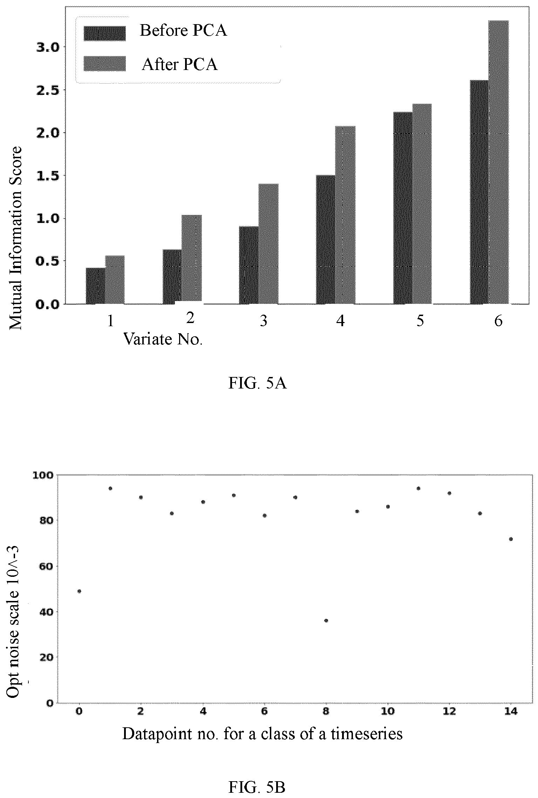

FIG. 5a depicts comparison of the MI scores per dimension for the Racket Sports dataset before and after PCA. It was observed that that individual MI values were increased significantly in most of the cases after doing PCA. During the experiment conducted, Gaussian noise was added to maximize these individual MI scores for each dimension and in-turn maximized the weighted sum of MI. FIG. 5B depicts optimal noise values required to reach maximum MI score for different random data points of a particular class of Racket Sports dataset. It was observed that the optimal noise values were clustered more or less within a short range of value, rather than being scattered abruptly - signifying that these optimal noise values work for all the data points of that particular class.

Table. 1 :- Classification accuracy of multivariate time series datasets (B = Base encoding, MI = Encoding with maximum mutual information)

| Dataset name | Dataset features | | | | Accuracy (%) | |
| --- | --- | --- | --- | --- | --- | --- |
| | Training data size | No. of classes | No. of dimensions | Length of time series | B | MI |
| Atrial Fibrillation (Sensor ECG) | 15 | 3 | 2 | 640 | 83.1 | 83.3 |
| Racket sports (Sensor: Gyroscope/ accelerometer) | 151 | 4 | 6 | 30 | 72 | 74.6 |
| Ethanol concentration (Sensor: Spectrum) | 261 | 4 | 3 | 1751 | 74.1 | 75.3 |

(continued)

| Dataset name | Dataset features | | | | Accuracy (%) | |
|---|---|---|---|---|---|---|
| | Training data size | No. of classes | No. of dimensions | Length of time series | B | MI |
| Finger movements (Sensor: EEG) | 316 | 2 | 28 | 62 | 74 | 76.3 |
| Pen digits (sensor: touch screen) | 7494 | 10 | 2 | 8 | 61 | 67 |

Effect of using optimized spike trains on the learning performance of the spiking reservoir can be observed in terms of classification accuracy for respective classes of aforesaid datasets. The accuracy using the Base Poisson encoding and the method 200 based scheme were compared in last two columns of Table 1. For all the datasets, the method 200 was found to perform better (max. 6% improvement for Pen Digits) or at par compared to the base encoding scheme. The method 200 was tested for different kind of datasets generated from a variety of sensors thus establishing its applicability across domains. Moreover, the scheme was found to be performing better irrespective of number of dimensions, length of time series etc. The method 200 was also identified as performing well for various training dataset size - starting from as low as 15 to as high as 7494.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of spike data optimization. The embodiment, thus provides a mechanism for determining Mutual Information between an input multivariate time series data and a corresponding spike data. Moreover, the embodiments herein further provide a mechanism to achieve a maximum MI by iteratively adding gaussian noise to input data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   collecting (202), via one or more hardware processors, a time-series data as input data;
   generating (204) a ranked set of optimized dimensions in the input data, via the one or more hardware processors;
   encoding (206) the input data to a spike domain, via the one or more hardware processors, by processing the ranked set of optimized dimensions using an encoding scheme;
   determining (208) a Mutual Information (MI) between the input data and corresponding data from the spike domain, for each of a plurality of dimensions of the input data, via the one or more hardware processors, wherein the MI is a quantitative representation of similarity between the input data and the corresponding data from the spike domain;
   determining (210) a weighted sum of the MI of the plurality of dimensions of the input data, via the one or more hardware processors;
   determining (212) if the weighted sum of the MI at least matches a maximum MI value, via the one or more hardware processors, wherein the input data is optimized to achieve the maximum MI value if the weighted sum of the MI is not matching the maximum MI value; and
   optimizing (214) a plurality of spike trains in the spike data, via the one or more hardware processors, using the input data after achieving the maximum MI value, to generate an optimized set of spike trains.

2. The method of claim 1, wherein the ranked set of optimized dimensions in the input data are generated by performing a Principle Component Analysis (PCA) on the input data.

3. The method of claim 1, wherein the MI is determined for each of a plurality of dimensions of the input data, based on temporal information contained in an entire spike train of each of a plurality of dimensions of the input data.

4. The method of claim 1, wherein the plurality of spike trains in the spike data are optimized by adding gaussian noise to the input data iteratively till the maximum MI is achieved.

5. The method of claim 4, wherein the maximum MI is updated in one or more of a plurality of iterations of optimization of the spike train, further comprising:

   comparing value of the maximum MI in a current iteration with the value of the maximum MI in previous iteration; and
   updating the maximum MI as equal to the value of the maximum MI in the current iteration, if exceeding the value of the maximum MI in the previous iteration.

6. A system, comprising:

   one or more hardware processors (102);
   a communication interface (112); and
   a memory (104) storing a plurality of instructions, wherein the plurality of instructions when executed, cause the one or more hardware processors to:

      collect a time-series data as input data;
      generate a ranked set of optimized dimensions in the input data;
      encode the input data to a spike domain, by processing the ranked set of optimized dimensions using an encoding scheme;

determine a Mutual Information (MI) between the input data and corresponding data from the spike domain, for each of a plurality of dimensions of the input data, wherein the MI is a quantitative representation of similarity between the input data and the corresponding data from the spike domain;

determine a weighted sum of the MI of the plurality of dimensions of the input data;

determine if the weighted sum of the MI at least matches a maximum MI value, wherein the input data is optimized to achieve the maximum MI value if the weighted sum of the MI is not matching the maximum MI value; and

optimize a plurality of spike trains in the spike data, using the input data after achieving the maximum MI value, to generate an optimized set of spike trains.

7. The system as claimed in claim 6, wherein the one or more hardware processors are configured to generate the ranked set of optimized dimensions in the input data by performing a Principle Component Analysis (PCA) on the input data.

8. The system as claimed in claim 6, wherein the one or more hardware processors are configured to determine the MI for each of a plurality of dimensions of the input data, based on temporal information contained in an entire spike train of each of a plurality of dimensions of the input data.

9. The system as claimed in claim 6, wherein the one or more hardware processors are configured to optimize the plurality of spike trains in the spike data by adding gaussian noise to the input data iteratively till the maximum MI is achieved.

10. The system as claimed in claim 9, wherein the one or more hardware processors are configured to update the maximum MI in one or more of a plurality of iterations of optimization of the spike train, by:

comparing value of the maximum MI in a current iteration with the value of the maximum MI in previous iteration; and

updating the maximum MI as equal to the value of the maximum MI in the current iteration, if exceeding the value of the maximum MI in the previous iteration.

11. One or more non-transitory machine-readable information storage mediums comprising one or more instructions which when executed by one or more hardware processors cause:

collecting , a time-series data as input data;

generating a ranked set of optimized dimensions in the input data;

encoding the input data to a spike domain, by processing the ranked set of optimized dimensions using an encoding scheme;

determining a Mutual Information (MI) between the input data and corresponding data from the spike domain, for each of a plurality of dimensions of the input data, wherein the MI is a quantitative representation of similarity between the input data and the corresponding data from the spike domain;

determining a weighted sum of the MI of the plurality of dimensions of the input data;

determining if the weighted sum of the MI at least matches a maximum MI value, wherein the input data is optimized to achieve the maximum MI value if the weighted sum of the MI is not matching the maximum MI value; and

optimizing a plurality of spike trains in the spike data, using the input data after achieving the maximum MI value, to generate an optimized set of spike trains.

12. The one or more non-transitory machine-readable information storage mediums of claim 11, wherein the ranked set of optimized dimensions in the input data are generated by performing a Principle Component Analysis (PCA) on the input data.

13. The one or more non-transitory machine-readable information storage mediums of claim 11, wherein the MI is determined for each of a plurality of dimensions of the input data, based on temporal information contained in an entire spike train of each of a plurality of dimensions of the input data.

14. The one or more non-transitory machine-readable information storage mediums of claim 11, wherein the plurality of spike trains in the spike data are optimized by adding gaussian noise to the input data iteratively till the maximum MI is achieved.

**15.** The one or more non-transitory machine-readable information storage mediums of claim 14, wherein the maximum MI is updated in one or more of a plurality of iterations of optimization of the spike train, comprising:

comparing value of the maximum MI in a current iteration with the value of the maximum MI in previous iteration; and
updating the maximum MI as equal to the value of the maximum MI in the current iteration, if exceeding the value of the maximum MI in the previous iteration.

100

108

MEMORY 104

MODULES 106

REPOSITORY 110

I/O INTERFACE
112

HARDWARE
PROCESSORS
102

FIG. 1

202

Collecting, via one or more hardware processors, a time series data as input data

204

Generating a ranked set of optimized dimensions in the input data, via the one or more hardware processors

206

Encoding the input data to a spike domain, via the one or more hardware processors, by processing the ranked set of optimized dimensions using an encoding scheme

208

Determining a Mutual Information (MI) between the input data and a corresponding data from the spike train, for each of a plurality of dimensions from the input data, via the one or more hardware processors, wherein the MI is a quantitative representation of similarity between the input data and the corresponding data from the spike train

210

Determining a weighted sum of the MI for a plurality of dimensions of the input data, via the one or more hardware processors

A

200

FIG. 2A

A

Determining if the weighted sum of the MI at least matches a maximum MI value, via the one or more hardware processors, wherein the input data is optimized to achieve the maximum MI value if the weighted sum of the MI is not matching the maximum MI value

*212*

Optimizing a plurality of spike trains in the spike data, via the one or more hardware processors, using the input data after achieving the maximum MI value, to generate an optimized set of spike trains

*214*

200

FIG. 2B

FIG. 3

FIG. 4A

FIG. 4B

FIG. 5A

FIG. 5B

Europäisches
Patentamt

European
Patent Office

Office européen
des brevets

## EUROPEAN SEARCH REPORT

Application Number

EP 22 20 9875

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Banerjee Dighanchal ET AL: "Efficient Optimized Spike Encoding for Spiking Neural Networks", OPT2020: 12th Annual Workshop on Optimization for Machine Learning Efficient Optimized Spike Encoding for Spiking Neural Networks, 11 December 2020, 11 December 2020 (2020-12-11), pages 1-11, XP055833805, Retrieved from the Internet: URL:https://opt-ml.org/papers/2020/paper_55.pdf [retrieved on 2021-08-23] * Section 3; figure 1 * | 1-15 | INV. G06N3/049 |

TECHNICAL FIELDS SEARCHED (IPC)

G06N

The present search report has been drawn up for all claims

| Place of search | Date of completion of the search | Examiner |
|---|---|---|
| The Hague | 14 June 2023 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221011943